# EUROPÄISCHE PATENTSCHRIFT

(11) **EP 3 467 386 B1**
(45) Veröffentlichungstag und Bekanntmachung des Hinweises auf die Patenterteilung: **13.11.2019**
(21) Anmeldenummer: 18192752.6
(22) Anmeldetag: 05.09.2018
(51) Int. Cl.: F24C 15/20

(54) **DUNSTABZUGSEINRICHTUNG UND VERFAHREN ZUM MONTIEREN EINER DUNSTABZUGSEINRICHTUNG**
DEVICE FOR A VAPOUR-EXHAUST EXTRACTION SYSTEM AND METHOD FOR MOUNTING A VAPOUR-EXHAUST EXTRACTION SYSTEM
DISPOSITIF FORMANT HOTTE ASPIRANTE ET PROCÉDÉ DE MONTAGE D'UN DISPOSITIF FORMANT HOTTE ASPIRANTE

(30) Priorität: 29.09.2017 DE 102017122667
(43) Veröffentlichungstag der Anmeldung: 10.04.2019
(73) Patentinhaber: Miele & Cie. KG, 33332 Gütersloh (DE)
(72) Erfinder: Robbert, Andreas, 59469 Ense-Lüttringen (DE); Eckardt, Gerd, 59846 Sundern (DE); Schüsseler, Dirk, 59821 Arnsberg (DE)

(56) Entgegenhaltungen:
- EP-A1- 2 327 936
- DE-C1- 4 409 191
- JP-A- 2005 055 126

## Beschreibung

Der hier vorgestellte Ansatz betrifft eine Dunstabzugseinrichtung sowie ein Verfahren zum Montieren einer Dunstabzugseinrichtung, gemäß den Hauptansprüchen.

Eine Dunstabzugshaube kann über ein Kochfeld gehängt werden, um beim Kochen entstehenden Dunst abzusaugen. Dabei kann die Dunstabzugshaube an einem Seil aufgehängt sein, wie es aus der Druckschrift EP 2 327 936 A1 bekannt ist. Aus der Druckschrift JP 2005 055 126 A ist eine Dunstabzugshaube bekannt, welche in der Höhe über dem Kochfeld verstellbar ist.

Eine lösbare Befestigung eines Seils ist beispielsweise aus der Druckschrift DE 44 09 191 C1 bekannt, welche eine Seilklemmvorrichtung für eine Schachtförderanlage eines Bergwerks zeigt.

Von diesem Stand der Technik ausgehend ist es die Aufgabe des hier vorgestellten Ansatzes eine verbesserte Dunstabzugseinrichtung sowie ein verbessertes Verfahren zum Montieren einer Dunstabzugseinrichtung zu schaffen.

Diese Aufgabe wird durch eine Dunstabzugseinrichtung sowie ein Verfahren zum Montieren einer Dunstabzugseinrichtung mit den Merkmalen der Hauptansprüche gelöst. Vorteilhafte Ausgestaltungen und Weiterbildungen der Erfindung ergeben sich aus den abhängigen Ansprüchen.

Die mit dem hier vorgestellten Ansatz einhergehenden Vorteile bestehen neben einer optional höhenverstellbaren Zugentlastung unter anderem in einer federunterstützenden Dämpfung für den Fehlerfall. Zudem ist eine Flächenklemmung eines die Dunstabzugshaube haltenden Seils möglich. Dabei kann eine Einkerbung und/oder Einschnürung des Seils unterbleiben. Dies ist insbesondere deshalb von Vorteil, da das Seil wenigstens einen elektrischen Leiter enthält, bei welchem Einkerbung und/oder Einschnürung vermieden werden müssen.

Es wird eine Dunstabzugseinrichtung vorgestellt, die eine Dunstabzugshaube, ein Deckenelement und zumindest ein Seil zum Befestigen der Dunstabzugshaube an dem Deckenelement umfasst, wobei die Zugentlastungsvorrichtung die folgenden Merkmale aufweist:
einen Bauteilträger;
eine Seilscheibe, die drehbeweglich in dem Bauteilträger gelagert ist und eine Mantelfläche zum Führen des Seils aufweist;
eine Zugentlastungseinrichtung, die gegenüberliegend zu der Mantelfläche angeordnet ist, wobei das Seil zwischen der Seilscheibe und der Zugentlastungseinrichtung einklemmbar ist; und
ein Federelement, das mit dem Bauteilträger und der Seilscheibe gekoppelt ist.

Bei einer Zugentlastungsvorrichtung kann es sich um eine mechanische Schutzvorrichtung für eine Dunstabzugseinrichtung handeln. Bei einer Dunstabzugshaube kann es sich um ein Gerät zum Absaugen und Filtern von beim Kochen entstehenden Wrasen handeln. Bei dem Deckenelement kann es sich um ein Element zur Befestigung einer Dunstabzugshaube an einer Raumdecke handeln. Bei einem Seil kann es sich beispielsweise um ein Drahtseil oder eine Kunststoffseil mit oder ohne integrierte Netzleitung handeln. Bei einem Bauteilträger kann es sich um ein tragendes Bauteil handeln, dass als Gehäuse für die Seilscheibe dienen kann. Bei einer Seilscheibe kann es sich um ein mechanisches Bauteil handeln, dass eine Umlenkung des Seils ermöglicht. Bei einer Zugentlastungseinrichtung kann als Teil des Bauteilträgers oder als ein separates Element ausgeformt sein. Beispielsweise kann es sich bei der Zugentlastungseinrichtung um eine Spannlasche handeln. Das Federelement kann als Druckfeder, beispielsweise als Schraubenfeder oder Blattfeder ausgeformt sein.

Die Dunstabzugseinrichtung kann somit mit einer speziellen Zugentlastungsvorrichtung mit einer Seilaufhängung mit einer integrierten Netzleitung realisiert werden. Dabei kann die Dunstabzugseinrichtung nachträglich vor Ort in der Höhe verstellbar sein. Vorteilhafterweise kann bei einer geringen Fallhöhe der Dunstabzugshaube, beispielsweise beim Reinigen der Dunstabzugshabe und einem anschließenden Fallenlassen der Dunstabzugshaube in die Seile, weiterhin die nötige elektrotechnische Sicherheit für die integrierte Netzleistung garantieren.

Gemäß einer Ausführungsform kann die Seilscheibe an der Mantelfläche eine Nut zur Aufnahme des Seils umfassen. Dadurch kann ein Abrutschen des Seils verhindert werden
Gemäß einer Ausführungsform kann die Zugentlastungseinrichtung als ein Zugentlastungsblechstreifen ausgeformt sein. Dieser ist einfach und kostengünstig herzustellen.

Gemäß einer Ausführungsform kann der Zugentlastungsblechstreifen an dem Bauteilträger eingehängt sein und die Mantelfläche der Seilscheibe zumindest abschnittsweise umgeben. Durch das Einhängen an dem Bauteilträger kann der Zugentlastungsblechstreifen fixiert werden.

Gemäß einer Ausführungsform kann die Zugentlastungsvorrichtung eine Einstelleinrichtung zum Einstellen eines Abstands zwischen der Zugentlastungseinrichtung und der Seilscheibe umfassen. Hierdurch ist eine Haltekraft einstellbar, so dass die Zugentlastungsvorrichtung an Dunstabzugshauben unterschiedlichen Gewichts angepasst werden kann
Gemäß einer Ausführungsform kann die Einstelleinrichtung als eine Einstellschraube ausgeformt sein, die die Zugentlastungseinrichtung mit dem Bauteilträger oder der Seilscheibe verbindet. Mittels der Einstellschraube kann der Abstand zwischen der der Zugentlastungseinrichtung und der Seilscheibe justiert werden.

Erfindungsgemäß ist das Federelement ausgeformt, um eine Rückstellkraft auf die Seilscheibe auszuüben, wobei die Rückstellkraft einer über das Seil auf die Seilscheibe wirkenden Gewichtskraft der Dunstabzugshaube entgegenwirkt. Dadurch kann das Federelement einen ruckartigen Zug an dem Seil abdämpfen.

Gemäß einer Ausführungsform kann die Seilscheibe segmentförmig mit einer ersten Randfläche und einer zweiten Randfläche ausgeformt sein, wobei die Mantelfläche die Randflächen verbindet und bogenförmig ausgeformt ist, und wobei die erste Randfläche eine Aussparung zum Aufnehmen des Federelements aufweist. Dabei kann die Seilscheibe eine Drehachse zum drehbeweglichen Lagern der Seilscheibe aufweisen. Dabei kann die Aussparung zwischen der Drehachse und der Mantelfläche angeordnet sein. Dadurch kann eine Hebelwirkung zum Verstärken der Federkraft erreicht werden.

Es wird eine Dunstabzugseinrichtung mit den folgenden Merkmalen vorgestellt:
einem Deckenelement, das an einer Raumdecke fixierbar ist;
einer Dunstabzugshaube zum Absaugen und Filtern der beim Kochen entstehenden Wrasen;
zumindest einem Seil zum Befestigen der Dunstabzugshaube an dem Deckenelement;
einer genannten Zugentlastungsvorrichtung, wobei das Seil von der Mantelfläche der Seilscheibe der Zugentlastungsvorrichtung geführt ist.

Gemäß einer Ausgestaltung enthält das Seil wenigstens einen elektrischen Leiter. Eine bevorzugte Ausführungsform eines solchen Seils sieht vor, dass das Seil aus einer Seele, einem die Seele umschließenden Mantel und einer zwischen Mantel und Seele vorgesehen Zwischenschicht besteht. Dabei sind die Seele und der Mantel jeweils aus einem Draht oder mehreren Drähten gebildet, und bestehen vorzugweise aus einem Metall, während die Zwischenschicht bevorzugt aus einem elastischen Kunststoff besteht. Insbesondere ist vorgesehen, dass die Seele als ein elektrischer Leiter ausgeführt, der Mantel zur Übertragung von Zugkräften ausgebildet und die Zwischenschicht als elektrischer Isolator eingerichtet ist. Es sind auch andere Ausführungsformen des Seils möglich. So kann das Seil keine oder mehrere elektrische Leiter enthalten. Auch ist es möglich, dass die Seele allein oder ergänzend zur Übertragung von Zugkräften eingerichtet ist.

Gemäß einer Ausführungsform kann das Deckenelement eine Grundplatte aufweisen, die ausgeformt ist, um an der Raumdecke fixiert zu werden. Dabei kann die Zugentlastungsvorrichtung an der Grundplatte befestigt sein. Dadurch kann die Zugentlastungsvorrichtung vollständig in das Deckenelement integriert werden. Erfindungsgemäß ist ein Verfahren zum Montieren einer Dunstabzugseinrichtung vorgesehen, wobei das Verfahren die folgenden Schritte umfasst:
Herstellen einer mechanischen und einer elektrischen Verbindung des zumindest einen Seils mit der Dunstabzugshaube;
Führen des zumindest einen Seils durch die Zugentlastungsvorrichtung;
Herstellen einer mechanischen und einer elektrischen Verbindung des zumindest einen Seils mit dem Deckenelement; und
Einstellen des Seils auf die erforderliche Länge.

Die hier beschriebene Vorrichtung für eine Dunstabzugseinrichtung sowie das Verfahren zum Montieren einer Dunstabzugseinrichtung kann entsprechend im Zusammenhang mit einem gewerblichen oder professionellen Gerät, beispielsweise einer Dunstabzugseinrichtung für Großküchen und/oder Restaurants verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Dunstabzugseinrichtung gemäß einem Ausführungsbeispiel;
- Figur 2: eine schematische Darstellung einer Zugentlastungsvorrichtung gemäß einem Ausführungsbeispiel;
- Figur 3: einen schematischen Aufbau einer Zugentlastungsvorrichtung gemäß einem Ausführungsbeispiel;
- Figur 4: eine schematische Querschnittsansicht einer Zugentlastungsvorrichtung mit einem gespannten Federelement gemäß einem Ausführungsbeispiel;
- Figur 5: eine schematische Querschnittsansicht einer Zugentlastungsvorrichtung mit einem ungespannten Federelement gemäß einem Ausführungsbeispiel; und
- Figur 6: ein Ablaufdiagram eines Ausführungsbeispiels eines Verfahrens zum Montieren einer Dunstabzugseinrichtung gemäß einem Ausführungsbeispiel.

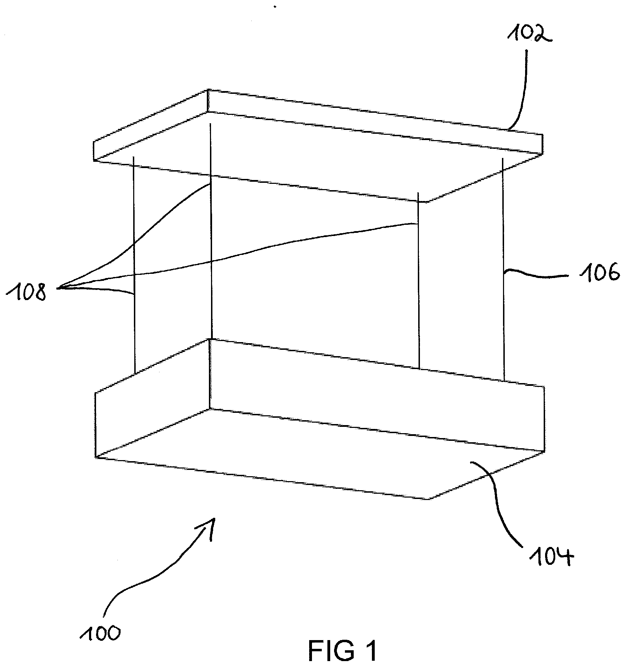

Figur 1 zeigt eine schematische Darstellung einer Dunstabzugseinrichtung 100 gemäß einem Ausführungsbeispiel. Die Dunstabzugseinrichtung 100 umfasst ein Deckenelement 102 und eine Dunstabzugshaube 104. Die Dunstabzugshaube 104 ist mittels zumindest eines Seils 106, im Folgenden als Drahtseils 106 bezeichnet, an dem Deckenelement 102 befestigt. Das Deckenelement 102 ist mechanisch an einer Raumdecke fixierbar und dient der elektrischen Anbindung der Dunstabzugshaube 104 an eine Netzspannung. Die Dunstabzugshaube 104 ist mit einem einstellbaren Abstand zum Deckenelement 102 in hängender Weise befestigbar.

Gemäß diesem Ausführungsbeispiel weist die Dunstabzugseinrichtung 100 zusätzlich zum Drahtseil 106 optional drei weitere Drahtseile 108 auf, die je als Verbindungsdrahtseil zum Aufhängen der Dunstabzugshaube 104 an dem Deckenelement 102 fungieren. Die Dunstabzugshaube 104 umfasst beispielsweise eine gesamte Lüftungstechnik, einschließlich Fettfilter, Geruchsfilter, Lüfter, Motor, Steuerung und Bedienelemente und dient dem Absaugen und Filtern der beim Kochen entstehenden Wrasen. Alternativ ist die Dunstabzugseinrichtung 100 mit mehr als vier Drahtseilen 106 realisiert.

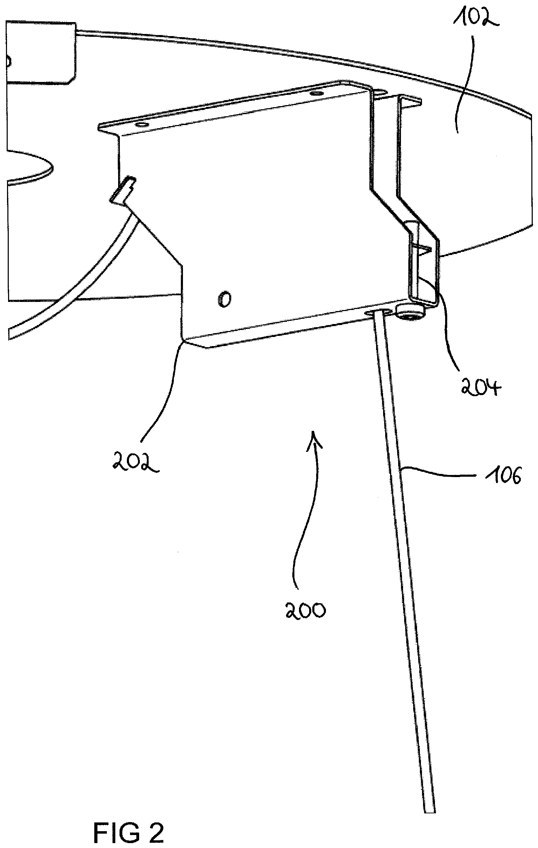

Für jedes Drahtseil 106 ist gemäß einem Ausführungsbeispiel eine Zugentlastungsvorrichtung vorgesehen, wie sie beispielsweise in Figur 2 gezeigt ist.

Figur 2 zeigt eine schematische Darstellung einer Zugentlastungsvorrichtung 200 gemäß einem Ausführungsbeispiel. Die Darstellung der Zugentlastungsvorrichtung 200 umfasst einen Bauteilträger 202, eine Einstelleinrichtung 204, ein Deckenelement 102 sowie ein Drahtseil 106. Das Deckenelement 102 weist hierbei eine Grundplatte auf, die ausgeformt ist, um an der Raumdecke fixiert zu werden. Die Zugentlastungsvorrichtung 200 ist an der Grundplatte befestigt.

Für die Montage der Dunstabzugseinrichtung 100 sind vorzugsweise das Deckenelement 102 und eine Dunstabzugshaube 104 bereits ab Werk über das Drahtseil 106 miteinander verbunden. Eine derart gelieferte Dunstabzugseinrichtung 100 wird vor Ort als Gesamtes an der Raumdecke aufgehängt.

Alternativ oder auch im Kundendienstfall, beispielsweise bei Austausch vom Drahtseil 106, kann bei der Montage der Dunstabzugseinrichtung zunächst das Deckenelement 102 an der Raumdecke fixiert und im Anschluss dann das Drahtseil 106 durch die Zugentlastungsvorrichtung 200 geführt und zumindest mechanisch, gegebenenfalls aber auch elektrisch, mit diversen Einrichtungen des Deckenelements 102 verbunden werden. Dabei wird das Drahtseil 106 bereits auf die erforderliche Länge zwischen dem Deckenelement 102 und der Dunstabzugshaube eingestellt und eine Zugentlastungseinrichtung der Zugentlastungsvorrichtung 200 mittels einer Einstelleinrichtung 204 gespannt, wobei das Drahtseil 106 zwischen einer Seilscheibe der Zugentlastungvorrichtung und der Zugentlastungseinrichtung kraftschlüssig gehalten wird. Anschließend wird die Dunstabzugshaube an dem freien Ende des Drahtseils 106 eingehängt.

In beiden Fällen kann eine Justierung der Länge des Drahtseils 106 durch ein leichtes Lösen der Klemmspannung an der Einstelleinrichtung 204 erfolgen.

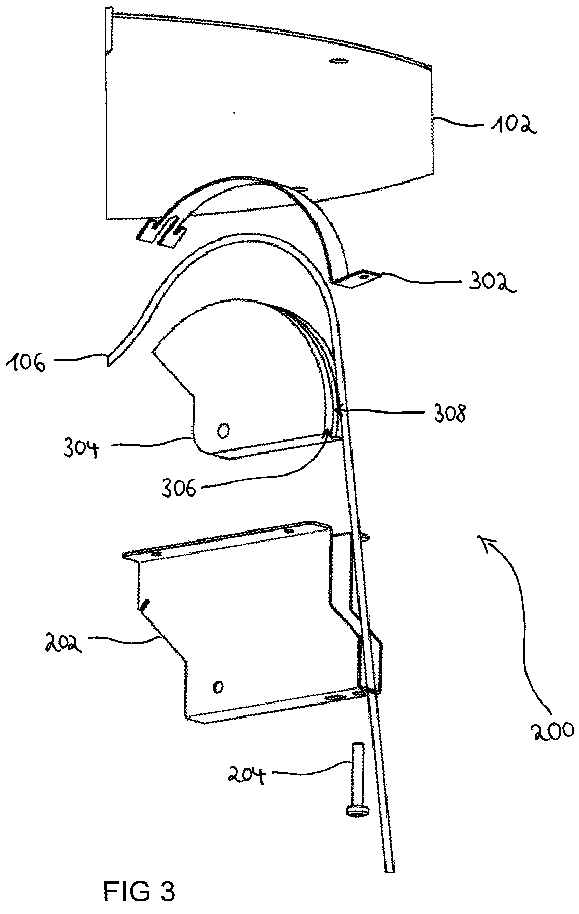

Figur 3 zeigt einen schematischen Aufbau einer Zugentlastungsvorrichtung 200 gemäß einem Ausführungsbeispiel. Bei der hier dargestellten Zugentlastungsvorrichtung 200 kann es sich um die Zugentlastungsvorrichtung 200 aus Figur 2 handeln. Die Zugentlastungsvorrichtung 200 umfasst eine Zugentlastungseinrichtung 302, eine Seilscheibe 304, einen Bauteilträger 202 sowie eine Einstelleinrichtung 204. Der Bauteilträger 202 kann an dem Deckenelement 102 befestigt werden. In Figur 3 ist ferner das Drahtseil 106 gezeigt, dass zwischen der Seilscheibe 304 und der Zugentlastungseinrichtung 302 durchgeführt wird.

Die Zugentlastungsvorrichtung 200 umfasst zunächst den Bauteilträger 202, wobei in dem Bauteilträger 202 die Seilscheibe 304 drehbeweglich gelagert ist. Die Seilscheibe 304 weist gemäß diesem Ausführungsbeispiel eine bogenförmige Mantelfläche 306 zum Führen des Drahtseils 106 auf, wobei die Mantelfläche 306 wiederrum eine Nut 308 zur Aufnahme des Drahtseils 106 aufweist. Gegenüberliegend zur Mantelfläche 306 der Seilscheibe 304 ist die Zugentlastungseinrichtung 302 angeordnet, wobei das Drahtseil 106 zwischen der Seilscheibe 304 und der Zugentlastungseinrichtung 302 einklemmbar ist. Ferner ist die Zugentlastungseinrichtung 302 im montierten Zustand der Zugentlastungsvorrichtung 200 an dem Bauteilträger 202 angehängt und umgibt die Mantelfläche 306 der Seilscheibe 304. Der Abstand der Zugentlastungseinrichtung 302 zur Mantelfläche 306 ist an der Einhängeseite der Zugentlastungseinrichtung 302 unveränderlich. Da die Zugentlastungseinrichtung 302 gemäß einem Ausführungsbeispiel als ein Blechstreifen ausgeformt ist, wird diese im Weiteren auch als Zugentlastungsblechstreifen 302 bezeichnet. An der gegenüberliegenden Einstellseite des Zugentlastungsblechstreifens 302 ist dieser mit der Einstelleinrichtung 204 verbunden. Die Einstelleinrichtung 204 dient dem Einstellen eines Abstands zwischen dem Zugentlastungsblechstreifen 302 und der Seilscheibe 304. Hierdurch ist die Haltekraft einstellbar. Ferner verbindet die Einstelleinrichtung 204 den Zugentlastungsblechstreifen 302 mit dem Bauteilträger 202 oder mit der Seilscheibe 304. Gemäß einem Ausführungsbeispiel ist die Einstelleinrichtung 204 als eine Schraube ausgeformt und wird im Weiteren auch als Einstellschraube 204 bezeichnet. Optional kann die Einstelleinrichtung 204 aber ebenso beispielsweise als ein Rastelement ausgeformt sein.

Gemäß einem Ausführungsbeispiel weist der Bauteilträger 202 zwei Seitenwände auf, die die Seilscheibe 304 seitlich abdecken. In den Seitenwänden ist je eine Durchgangsöffnung angeordnet, durch die eine Drehachse zum drehbeweglichen Lagern der Seilscheibe 304 geführt werden kann. Die Seilscheibe 304 kann dazu eine entsprechende Durchgangsöffnung aufweisen.

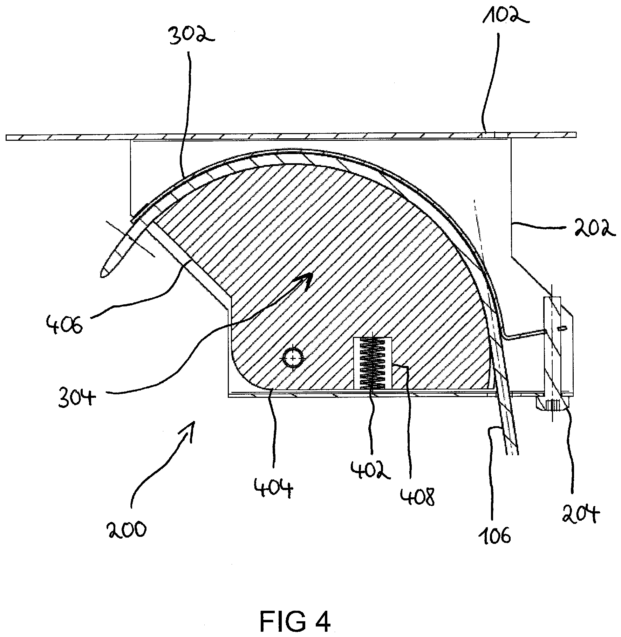

Figur 4 zeigt eine schematische Querschnittsansicht einer Zugentlastungsvorrichtung 200 mit einem gespannten Federelement 402 gemäß einem Ausführungsbeispiel. Die Querschnittsansicht der Zugentlastungsvorrichtung 200 umfasst den Bauteilträger 202, die Seilscheibe 304, den Zugentlastungsblechstreifen 302, ein Federelement 402, die Einstellschraube 204. Das Drahtseil 106 ist über die Mantelfläche der Seilscheibe 304 geführt und liegt an der Zugentlastungsblechstreifen 302 an, ist also zwischen Seilscheibe 304 und Zugentlastungsblechstreifen 302 eingeklemmt. Die Zugentlastungsvorrichtung 200 ist an dem Deckenelement 102 befestigt. Bei der hier dargestellten Zugentlastungsvorrichtung 200 kann es sich um die Zugentlastungsvorrichtung 200 aus Figur 2 handeln.

Das Federelement 402 ist zwischen einem dem Deckenelement abgewandten Bodenteil des Bauteilträgers 202 und der Seilscheibe 304 angeordnet. Das Federelement 402 ist ausgeformt, um eine Rückstellkraft auf die Seilscheibe 304 auszuüben, wobei die Rückstellkraft einer über das Drahtseil 106 auf die Seilscheibe 304 wirkenden Gewichtskraft der Dunstabzugshaube entgegenwirkt. Gemäß einem Ausführungsbeispiel ist das Federelement 402 in Figur 4 aufgrund eines Fehlerfalls gespannt bzw. belastet, beispielsweise weil die Zugentlastungsvorrichtung 200 zusätzlich zu dem Gewicht der Dunstabzugshaube belastet ist. Im Fehlerfall, beispielsweise durch ein leichtes Anheben der Dunstabzugshaube bei der Reinigung und einem anschließenden Fallenlassen der Dunstabzugshaube in das Drahtseil 106, wird die Belastung des Drahtseils 106 durch das Federelement gedämpft.

Die Seilscheibe weist eine erste Randfläche 404 und eine zweite Randfläche 406 auf, wobei die Mantelfläche der Seilscheibe die beiden Randflächen 404, 406 verbindet und wobei die erste Randfläche 404 eine Aussparung 408 zum Aufnehmen des Federelements 402 aufweist. Die erste Randfläche 404 ist dem Bodenteil des Bauteilträgers 202 zugewandt und schlägt in dem in Figur 4 gezeigten gestauchten Zustand des Federelements 402 an dem Bodenteil an. Der Abstand zwischen dem Deckenelement und der Dunstabzugshaube der Dunstabzugseinrichtung ist über ein Lösen der Klemmspannung an der Einstellschraube 204 verstellbar. Ferner dient die Einstellschraube 204 dem Einstellen eines Abstands zwischen dem Zugentlastungsblechstreifen 302 und der Seilscheibe 304, wodurch die Haltekraft einstellbar ist. Je geringer der Abstand zwischen dem Zugentlastungsblechstreifen 302 und der Seilscheibe 304 ist, desto größer ist die wirkende Reibkraft und desto gespannter ist das Federelement 402.

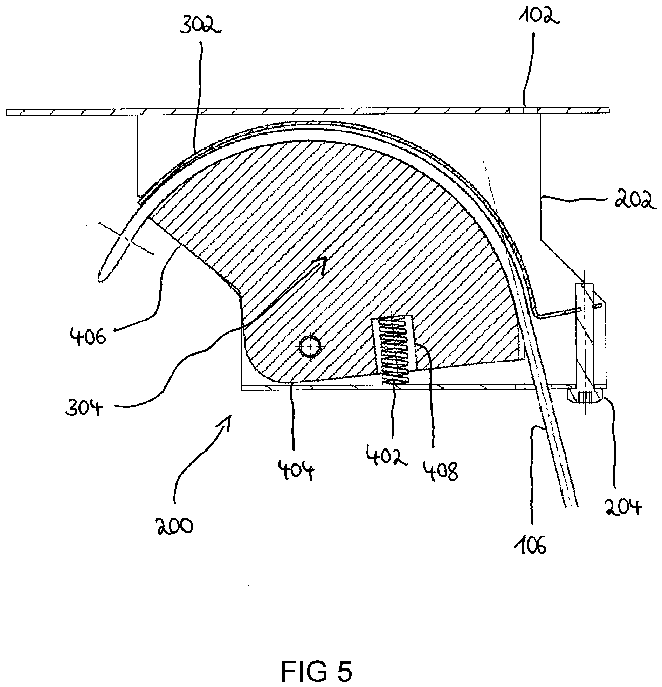

Figur 5 zeigt eine schematische Querschnittsansicht der bereits anhand von Figur 4 beschriebenen Zugentlastungsvorrichtung 200 mit einem ungespannten Federelement 402 gemäß einem Ausführungsbeispiel. Durch die Rückstellkraft des Federelements 402 ist die erste Randfläche 404 von dem Bodenteil des Bauteilträgers 202 weggedrückt.

Gemäß dem gezeigten Ausführungsbeispiel ist das Drahtseil 106 im vorgegebenem Krümmungsradius von beispielhaft mindestens 5cm in einer umlaufenden Nut in der federnd gelagerten Seilscheibe 304 geführt und mit dem Zugentlastungsblechstreifen 302 geklemmt. In dieser umlaufenden Nut wird das Drahtseil 106 mittels Flächenpressung über die Länge des Zugentlastungsblechstreifens 302 geklemmt und kann somit einen möglichen Fehlerfall überstehen. Der Zugentlastungsblechstreifens 302 kann zur Höhenverstellung gelöst und anschließend wieder befestigt werden.

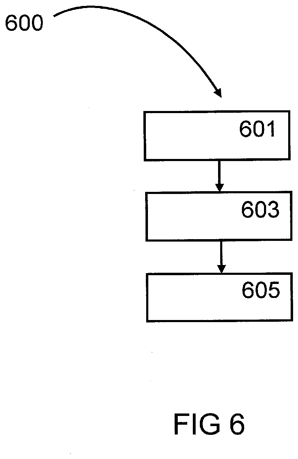

Figur 6 zeigt ein Ablaufdiagram eines Ausführungsbeispiels eines Verfahrens 600 zum Montieren einer Dunstabzugseinrichtung gemäß einem Ausführungsbeispiel.

Ein Verfahren 600 zum Montieren einer Dunstabzugseinrichtung weist die folgenden Schritte auf. In einem Schritt 601 wird das zumindest eine Drahtseil durch die Zugentlastungsvorrichtung geführt. Ferner wird in einem Schritt 603 das Drahtseil auf die erforderliche Länge eingestellt. Schließlich wird in einem Schritt 605 die Dunstabzugshaube an einem freien Ende des Drahtseils eingehängt.

## Patentansprüche

1. Dunstabzugseinrichtung (100) mit folgenden Merkmalen:
einem Deckenelement (102), das an einer Raumdecke fixierbar ist;
einer Dunstabzugshaube (104) zum Absaugen und Filtern der beim Kochen entstehenden Wrasen;
zumindest einem Seil (106) zum Befestigen der Dunstabzugshaube (104) an dem Deckenelement (102),
**dadurch gekennzeichnet, dass**
die Dunstabzugseinrichtung (100) eine Zugentlastungsvorrichtung (200) hat, welche die folgenden Merkmale aufweist:
- einen Bauteilträger (202);
- eine Seilscheibe (304), die drehbeweglich in dem Bauteilträger (202) gelagert ist und eine Mantelfläche (306) zum Führen des Seils (106) aufweist;
- eine Zugentlastungseinrichtung (302), die gegenüberliegend zu der Mantelfläche (306) angeordnet ist, wobei das Seil (106) zwischen der Seilscheibe (304) und der Zugentlastungseinrichtung (302) einklemmbar ist; und
- ein Federelement (402), das mit dem Bauteilträger (202) und der Seilscheibe (304) gekoppelt ist,
wobei das Seil (106) von der Mantelfläche (306) der Seilscheibe (304) der Zugentlastungsvorrichtung (200) geführt ist
und das Federelement (402) ausgeformt ist, um eine Rückstellkraft auf die Seilscheibe (304) auszuüben, wobei die Rückstellkraft einer über das Seil (106) auf die Seilscheibe (304) wirkenden Gewichtskraft der Dunstabzugshaube (104) entgegenwirkt.

2. Dunstabzugseinrichtung (100) gemäß Anspruch 1, wobei das Deckenelement (102) eine Grundplatte aufweist, die ausgeformt ist, um an der Raumdecke fixiert zu werden, und wobei die Zugentlastungsvorrichtung (200) an der Grundplatte befestigt ist.

3. Dunstabzugseinrichtung (100) gemäß Anspruch 1 oder 2, wobei das das Seil (106) wenigstens einen elektrischen Leiter enthält.

4. Dunstabzugseinrichtung (100) gemäß einem der vorangegangenen Ansprüche, wobei die Seilscheibe (304) an der Mantelfläche (306) eine Nut (308) zur Aufnahme des Seils (106) umfasst.

5. Dunstabzugseinrichtung (100) gemäß einem der vorangegangenen Ansprüche, bei der die Zugentlastungseinrichtung (302) als ein Zugentlastungsblechstreifen (302) ausgeformt ist.

6. Dunstabzugseinrichtung (100) gemäß Anspruch 5, bei der der Zugentlastungsblechstreifen (302) an dem Bauteilträger (202) eingehängt ist und die Mantelfläche (306) der Seilscheibe (304) zumindest abschnittsweise umgibt.

7. Dunstabzugseinrichtung (100) gemäß einem der vorangegangenen Ansprüche, mit einer Einstelleinrichtung (204) zum Einstellen eines Abstands zwischen der Zugentlastungseinrichtung (302) und der Seilscheibe (304).

8. Dunstabzugseinrichtung (100) gemäß Anspruch 7, bei der die Einstelleinrichtung (204) als eine Einstellschraube (204) ausgeformt ist, die die Zugentlastungseinrichtung (302) mit dem Bauteilträger (202) oder der Seilscheibe (304) verbindet.

9. Dunstabzugseinrichtung (100) gemäß einem der vorangegangenen Ansprüche, bei der die Seilscheibe (304) segmentförmig mit einer ersten Randfläche (404) und einer zweite Randfläche (406) ausgeformt ist, wobei die Mantelfläche (306) die Randflächen (404, 406) verbindet und bogenförmig ausgeformt ist, und wobei die erste Randfläche (404) eine Aussparung (408) zum Aufnehmen des Federelements (402) aufweist.

10. Dunstabzugseinrichtung (100) gemäß Anspruch 8, bei der die Seilscheibe (304) eine Drehachse zum drehbeweglichen Lagern der Seilscheibe (304) aufweist, wobei die Aussparung (408) zwischen der Drehachse und der Mantelfläche (306) angeordnet ist.

11. Verfahren (600) zum Montieren einer Dunstabzugseinrichtung (100) gemäß einem der Ansprüche 1 bis 10, wobei das Verfahren (600) die folgenden Schritte umfasst:
Herstellen einer mechanischen und einer elektrischen Verbindung des zumindest einen Seils (106) mit der Dunstabzugshaube (104);
Führen (601) des zumindest einen Seils (106) durch die Zugentlastungsvorrichtung (200);
Herstellen einer mechanischen und einer elektrischen Verbindung des zumindest einen Seils (106) mit dem Deckenelement (102); und
Einstellen (603) des Seils (106) auf die erforderliche Länge.

## Claims

1. Extractor device (100) comprising the following features:
a ceiling element (102) which can be fixed to a ceiling;
an extractor hood (104) for extracting and filtering the vapours produced during cooking;
at least one cord (106) for fastening the extractor hood (104) to the ceiling element (102),
**characterised in that** the extractor device (100) has a strain relief apparatus (200) which has the following features:
- a component carrier (202);
- a pulley (304) rotatably mounted in the component carrier (202) and having a curved surface (306) for guiding the cord (106);
- a strain relief device (302) which is arranged opposite to the curved surface (306), it being possible for the cord (106) to be clamped between the pulley (304) and the strain relief device (302); and
- a spring element (402) which is coupled to the component carrier (202) and the pulley (304), the cord (106) being guided by the curved surface (306) of the pulley (304) of the strain relief apparatus (200) and the spring element (402) being formed so as to exert a restoring force on the pulley (304), the restoring force counteracting a weight force of the extractor hood (104) acting on the pulley (304) via the cord (106).

2. Extractor device (100) according to claim 1, wherein the ceiling element (102) has a base plate which is formed so as to be fixed to the ceiling, and wherein the strain relief apparatus (200) is fastened to the base plate.

3. Extractor device (100) according to either claim 1 or claim 2, wherein the cord (106) contains at least one electrical conductor.

4. Extractor device (100) according to any of the preceding claims, wherein the pulley (304) comprises a groove (308) on the curved surface (306) for retaining the cord (106).

5. Extractor device (100) according to any of the preceding claims, wherein the strain relief device (302) is formed as a sheet-metal strain relief strip (302).

6. Extractor device (100) according to claim 5, wherein the sheet-metal strain relief strip (302) is hooked into the component carrier (202) and the curved surface (306) surrounds the pulley (304) at least in portions.

7. Extractor device (100) according to any of the preceding claims, comprising an adjusting device (204) for adjusting a distance between the strain relief device (302) and the pulley (304).

8. Extractor device (100) according to claim 7, wherein the adjusting device (204) is formed as an adjusting screw (204) which connects the strain relief device (302) to the component carrier (202) or the pulley (304).

9. Extractor device (100) according to any of the preceding claims, wherein the pulley (304) is formed as a segment having a first lateral surface (404) and a second lateral surface (406), the curved surface (306) connecting the lateral surfaces (404, 406) and being arc-shaped, and the first lateral surface (404) having a recess (408) for retaining the spring element (402).

10. Extractor device (100) according to claim 8, wherein the pulley (304) has an axis of rotation for rotatably mounting the pulley (304), the recess (408) being arranged between the axis of rotation and the curved surface (306).

11. Method (600) for assembling an extractor device (100) according to any of claims 1 to 10, wherein the method (600) comprises the following steps:
establishing a mechanical and an electrical connection between the at least one cord (106) and the extractor hood (104);
guiding (601) the at least one cord (106) through the strain relief apparatus (200);
establishing a mechanical and an electrical connection between the at least one cord (106) and the ceiling element (102); and
adjusting (603) the cord (106) to the required length.

## Revendications

1. Dispositif d'évacuation de vapeurs (100) présentant les caractéristiques suivantes :
un élément de plafond (102) qui peut être fixé au plafond d'une pièce ;
une hotte aspirante (104) pour extraire et filtrer les vapeurs produites pendant la cuisson ;
au moins un câble (106) pour fixer la hotte aspirante (104) à l'élément de plafond (102), **caractérisé en ce que** le dispositif d'évacuation de vapeurs (100) comporte un dispositif de décharge de traction (200) présentant les caractéristiques suivantes :
- un support de composant (202) ;
- une poulie à câble (304) qui est montée de manière rotative dans le support de composant (202) et présente une surface d'enveloppe (306) pour guider le câble (106) ;
- un dispositif de décharge de traction (302) disposé en face de ladite surface d'enveloppe (306), le câble (106) pouvant être serré entre ladite poulie à câble (304) et ledit dispositif de décharge de traction (302) ; et
- un élément de ressort (402) couplé au support de composant (202) et à la poulie à câble (304), le câble (106) étant guidé par la surface d'enveloppe (306) de la poulie à câble (304) du dispositif de décharge de traction (200), et l'élément de ressort (402) étant formé pour exercer une force de rappel sur la poulie de câble (304), la force de rappel s'exerçant en réaction à la force de pesanteur de la hotte aspirante (104) s'exerçant sur la poulie de câble (304) par le câble (106).

2. Dispositif d'évacuation de vapeurs (100) selon la revendication 1, dans lequel l'élément de plafond (102) présente une plaque de base formée pour être fixée au plafond de la pièce, et dans lequel le dispositif de décharge de traction (200) est fixé contre la plaque de base.

3. Dispositif d'évacuation de vapeurs (100) selon la revendication 1 ou 2, dans lequel le câble (106) comprend au moins un conducteur électrique.

4. Dispositif d'évacuation de vapeurs (100) selon l'une des revendications précédentes, dans lequel la poulie à câble (304) comprend une rainure (308) sur la surface d'enveloppe (306), destinée à recevoir le câble (106).

5. Dispositif d'évacuation de vapeurs (100) selon l'une des revendications précédentes, dans lequel le dispositif de décharge de traction (302) est réalisé sous la forme d'une bande de tôle pour la décharge de traction (302).

6. Dispositif d'évacuation de vapeurs (100) selon la revendication 5, dans lequel la bande de tôle pour la décharge de traction (302) est suspendue sur le support de composant (202) et entoure au moins par sections la surface d'enveloppe (306) de la poulie à câble (304).

7. Dispositif d'évacuation de vapeurs (100) selon l'une des revendications précédentes, comprenant un dispositif de réglage (204) pour régler une distance entre le dispositif de décharge de traction (302) et la poulie à câble (304).

8. Dispositif d'évacuation de vapeurs (100) selon la revendication 7, dans lequel le dispositif de réglage (204) est réalisé sous la forme d'une vis de réglage (204) qui relie le dispositif de décharge de traction (302) au support de composant (202) ou à la poulie à câble (304).

9. Dispositif d'évacuation de vapeurs (100) selon l'une des revendications précédentes, dans lequel la poulie à câble (304) est formée en un segment avec une première surface de bord (404) et une seconde surface de bord (406), la surface d'enveloppe (306) reliant les surfaces de bord (404, 406) et étant formée en arc, et la première surface de bord (404) présentant un évidement (408) destiné à recevoir l'élément de ressort (402).

10. Dispositif d'évacuation de vapeurs (100) selon la revendication 8, dans lequel la poulie à câble (304) présente un axe de rotation pour supporter en rotation la poulie à câble (304), l'évidement (408) étant disposé entre l'axe de rotation et la surface d'enveloppe (306).

11. Procédé (600) de montage d'un dispositif d'évacuation de vapeurs (100) selon l'une des revendications 1 à 10,le procédé (600) comprenant les étapes :
d'établissement d'une liaison mécanique et d'une liaison électrique entre l'au moins un câble (106) et la hotte aspirante (104) ;
de guidage (601) de l'au moins un câble (106) à travers le dispositif de décharge de traction (200) ;
d'établissement d'une connexion mécanique et d'une connexion électrique entre l'au moins un câble (106) et l'élément de plafond (102) ; et
d'ajustement (603) du câble (106) à la longueur requise.
